# EUROPEAN PATENT APPLICATION

(11) **EP 4 703 901 A1**
(43) Date of publication of application: **04.03.2026**
(21) Application number: 24197539.0
(22) Date of filing: 30.08.2024
(51) Int. Cl.: G06F 16/215, G06F 16/901

(54) **METHOD FOR CONTEXTUAL VISUALIZATION AND CLEANSING OF A KNOWLEDGE GRAPH**

(71) Applicant: Siemens Aktiengesellschaft, 80333 München (DE)
(72) Inventor: MANICKAM, Ramesh, 560100 Bangalore, Karnataka (IN)
(74) Representative: HKW Intellectual Property PartG mbB

(57) **Abstract**

The method comprises receiving an original knowledge graph (100) comprising nodes (N1 to Nn), and edges (E 1 to En) that define relationship between the nodes. Further, the node data associated with each of the nodes is segregated and a contextual node data associated with the node is determined based on a query received from a user. Further, the contextual node data is displayed to the user. Further, a verification operation is performed on the original knowledge graph (100) to identify errors. Further, one or more inputs is received from the user for updating the original knowledge graph (100) to correct the identified errors. Further, the original knowledge graph (100) is updated based on the inputs received from the user to obtain an updated knowledge graph.

## Description

The present disclosure relates to knowledge graphs, and more particularly relates to a method for contextual visualization and cleansing of a knowledge graph.

Knowledge graphs have become an essential tool in various industries for representing and managing large volumes of structured and unstructured data. They allow organizations to harness the power of relationships and connections within their data, enabling enhanced insights, decision-making, and automation. However, the effectiveness of knowledge graphs heavily relies on the quality and context of the data they encompass. Inaccurate, incomplete, or irrelevant data can significantly degrade the performance of knowledge graphs, leading to erroneous conclusions and suboptimal decisions.

Data cleansing is a critical process in maintaining the integrity of knowledge graphs. Traditional data cleansing techniques focus primarily on identifying and rectifying errors within datasets, such as duplicates, inconsistencies, and missing values. The traditional way of data cleansing requires a human user who is an expert in the domain to which the data corresponds to thoroughly look into the data stored in multiple tables and identify the errors and rectifying them accordingly. It is common knowledge that often these datasets that are part of the knowledge graph comprises thousands and millions of data points. Further, the existing systems presents all the data points of the knowledge graph, even the data points that are not contextually relevant to the human user. Therefore, the human user must examine all the data points of the knowledge graph to identify the errors, which is nearly impossible.

Further, the human intervention in the data cleansing processing may be prone to errors resulting due to human errors. The existing systems do not provide a mechanism to verify the accuracy of the corrections made by the human user.

To address these challenges, there is a growing need for an improved method for contextual visualization and cleansing of a knowledge graph overcoming the drawbacks of the existing art.

Therefore, it is an object of the invention to provide a method for contextual visualization and cleansing of a knowledge graph.

The method for contextual visualization and cleansing of a knowledge graph is implemented by a data processing device comprising a processing unit and a memory.

The method comprises receiving, by the data processing device, an original knowledge graph comprising nodes, and edges that define relationship between the nodes. The knowledge graph comprises data that are represented as nodes and edges representing the relationship between the nodes.

The method comprises segregating, by the data processing device, node data associated with each of the nodes. The node data comprises data type of the node, hierarchical information of the node, meta tags associated with the node, and a property data of the node. The node data is segregated and visually represented to provide insights and information relating to the node.

The method comprises determining, by the data processing device, a contextual node data associated with the node based on a query received from a user. The contextual data is a part of the segregated node data that is relevant to the context. The context may be received from the user as a form of a query or may be determined based on user's profile further the node data relevant to the context is determined from the entire node data.

In one embodiment, the step of determining a contextual node data associated with the node further comprises receiving, by the data processing device, a unique identifier associated with the user to authenticate the user. The unique identifier may be a credential that is uniquely associated with the user. The step further comprises obtaining, by the data processing device, information pertaining to the user based on the unique identifier associated with the user. The information pertaining to the user may area of expertise of the user or the like. The step further comprises determining the context based on the information pertaining to the user. The information pertaining to the user is processed to determine the context. The step further comprises identifying, by the data processing device, the contextual node data by identifying segregated node data relevant to the determined context. The graphically displaying, by the data processing device, the identified contextual node data relevant to the determined context. Advantageously, presenting the contextual node data based on information pertaining to the user enables better understanding of the data by the user as the user is likely to be familiar with the contextual data that is displayed to the user.

In another embodiment, the step of determining a contextual node data associated with the node further comprises processing, by the data processing device, the query received from the user. The step further comprises determining, by the data processing device, the context from the query received from the user after processing the query. The step further comprises identifying, by the data processing device, the contextual node data by identifying the segregated node data relevant to the determined context. The step further comprises graphically displaying, by the data processing device, the identified contextual node data relevant to the determined context.

The method comprises displaying, by the data processing device, the contextual node data to the user. Thus, displaying the contextual node data enables the user to analyze the relevant data in the original knowledge graph and detect errors in the contextual node data. Advantageously, displaying the contextual node data instead of the entire data reduces the human effort to sift through the entire database for identifying errors and correcting them. The contextual node data that is displayed to the user may be presented in a user-friendly manner.

The step of displaying the contextual node data to the user further comprises presenting an information related to an asset associated with the node based on the query received from the user, wherein the information related to the asset is presented in an audio or visual medium to the user. Advantageously, presenting the information using the audio or visual medium enables in better understanding of the data and aids in easier validation of the data by the user.

The method comprises performing, by the data processing device, a verification operation on the original knowledge graph to identify errors. The data processing device automatically performs a verification operation and identifies the errors in the original knowledge graph.

The method comprises receiving, by the data processing device, one or more inputs from the user for updating the original knowledge graph to correct the identified errors.

The method comprises updating, by the data processing device, the original knowledge graph based on the inputs received from the user to obtain an updated knowledge graph.

The step of updating the original knowledge graph by the data processing device includes modifying at least a part of the node data associated with at least one node.

The method further comprises recommending, by the data processing device, a correct data to rectify the error in the original knowledge graph. Advantageously, this step reduces the human effort and inconsistencies in identifying the error and fixing the error with a correct data.

The step of recommending a correct data to rectify the error in the original knowledge graph further comprises retrieving, from the memory, at least two sources of information related to the error in data that is detected. The step comprises comparing, by the data processing device, the data in the retrieved two sources of information with each other. The step comprises identifying, by the data processing device, the correct data based on the comparison between the two sources of information based on a reliability score of the sources of information. The step comprises recommending, by the data processing device, the identified correct data to the user to rectify the error in the original knowledge graph.

Advantageously, using two sources of information for determining the data for correcting the knowledge graph ensures the authenticity of the data is provided by the user. Such a technique minimizes errors caused by human intervention.

The object of the present invention is achieved by a data processing device configured for contextual visualization and cleansing of a knowledge graph. The data processing device comprises one or more processing units and a memory communicatively coupled to the one or more processing units. The memory comprises a module stored in the form of machine-readable instructions which when executed by the processing unit, cause the processing unit to perform the method as describe above.

The object of the present invention is achieved by a system for contextual visualization and cleansing of a knowledge graph. The system comprises a User Interface (UI) device, and a data processing device. The UI device comprises an input unit and an output unit, wherein the UI device is configured to receive one or more inputs from the user via the input unit. The UI device is configured to display the contextual node data to the user, wherein the contextual node data enables the user to analyze the relevant data in the original knowledge graph and detect errors in the contextual node data. The data processing device is communicatively connected to the UI device, wherein the data processing device is configured for contextual visualization and cleansing of a knowledge graph.

The object of the present invention is achieved by a computer-program product, having computer-readable instructions stored therein, that when executed by a processing unit, cause the processing unit to perform the above-mentioned method steps.

The object of the present invention is achieved by a computer readable medium on which program code sections of a computer program are saved, the program code sections being loadable into and/or executable in a system to make the system execute the above method steps.

The present invention is further described hereinafter with reference to illustrated embodiments shown in the accompanying drawings, in which:
- FIG 1: illustrates a diagram of a knowledge graph 100, according to one embodiment of the present invention;
- FIG 2: illustrates a system 200 for contextual visualization and cleansing of a knowledge graph 100, according to an embodiment of the present invention;
- FIG 3: illustrates a block diagram 300 of a data processing device 202, according to one embodiment of the present invention;
- FIG 4: illustrates a flowchart 400 of method for contextual visualization and cleansing of a knowledge graph 100, according to one embodiment of the present invention;
- FIG 5: illustrates an example user interface 500 for displaying contextual node to the user, according to an embodiment of the present invention;
- FIG 6: is a flowchart 600 illustrating a method of determining context for contextual node data, according to an embodiment of the present invention;
- FIG 7: is a flowchart 700 illustrating a method of determining context for contextual node data, according to an embodiment of the present invention; and
- FIG 8: is a flowchart 800 of a method of automatically recommending correct data to rectify error in a knowledge graph 100, according to an embodiment of the present invention;

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

The term "knowledge graph" represents a semantic network that represents entities and their relationships in a structured and interconnected manner. It employs a graph-based data model, where nodes represent entities (such as people, places, things, or concepts) and edges represent the relationships between them (e.g., "is a," "has," "related to"). Knowledge graphs are typically constructed using ontologies, which provide a formal vocabulary and structure for defining the entities and relationships within the domain.

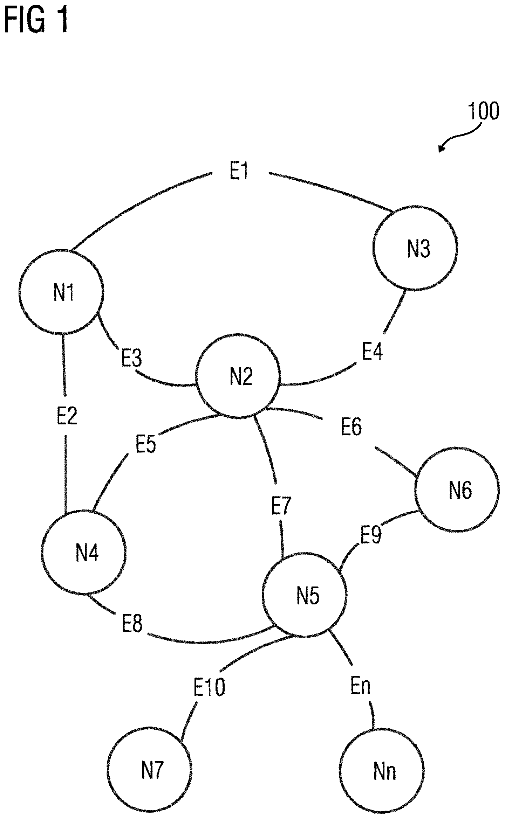

FIG. 1 illustrates a diagram of a knowledge graph 100, according to one embodiment of the present invention. The knowledge graph 100 comprises multiple nodes (N1 to Nn) representing entities and multiple edges (E 1 to En) representing relationships between the nodes. The entities may be specific objects, elements, components, or subjects. In an example, the entities may be devices, machinery, robots, equipment, assembly lines, conveyors, motors, pumps, compressors, or any other mechanical, electrical, electronic equipment, location, or the like. The edges may be parameters that further define the relationship between the entities. Examples of relationships may include operating conditions, mode of connection, so on and so forth.

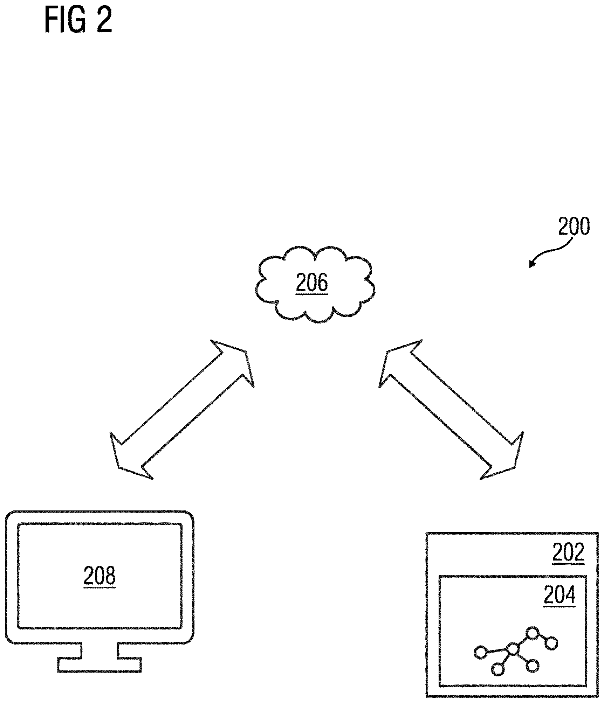

FIG. 2 illustrates a system 200 for contextual visualization and cleansing of a knowledge graph 100, according to an embodiment of the present invention. The system 200 comprises a data processing device 202 comprising a database 204, a communication network 206, and a User Interface (UI) device communicatively connected to the data processing device 202 via the communication network 206.

The data processing device 202 may be a computing device such as a server, desktop computer, laptop, mobile phone so on and so forth. The data processing device 202 comprises the database 204 that is configured to store the knowledge graphs 100. The data processing device 202 processes the knowledge graph 100 to cleanse the data in the knowledge graph 100 and further present the contextual data to the user based on the requirements of the user.

The UI device 208 may be a device having a screen and capable of performing human-machine interaction, such as a mobile phone, notebook computer, tablet, desktop computer, virtual reality (VR) device, Augmented reality (AR) device, server, or the like. The UI device 208 is provided with input units and display units, respectively. Users of the UI device 208 can access the data processing device 202 via a graphical user interface displayed on the respective display unit. The graphical user interfaces may be specifically designed for accessing the knowledge graphs 100 stored in the database 204 of the data processing device 202.

The communication network 206 may include, but are not limited to, any one or more different types of networks such as, for example, cable networks, public networks (e.g., the Internet), private networks (e.g., frame-relay networks), wireless networks, cellular networks, telephone networks (e.g., a public switched telephone network), cloud based networks, or any other suitable private or public packet switched or circuit switched networks. Such network(s) may have any suitable communication range associated therewith and may include, for example, global networks (e.g., the Internet), metropolitan area networks (MANs), wide area networks (WANs), local area networks (LANs), or personal area networks (PANs).

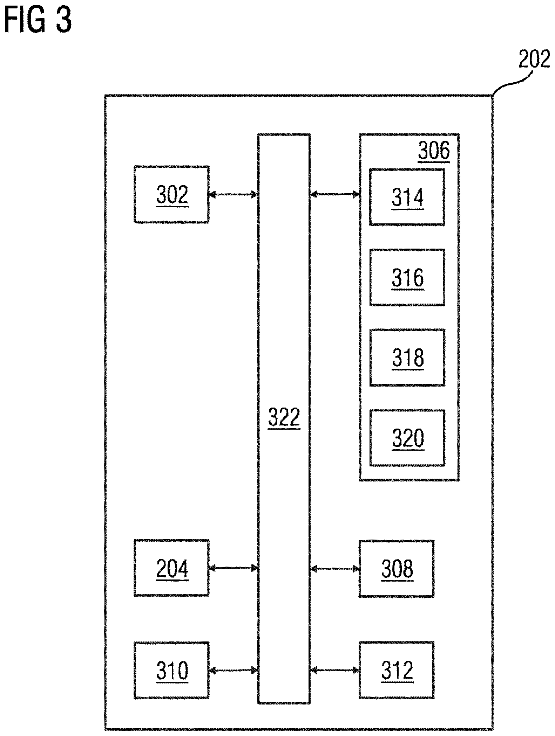

FIG. 3 illustrates a block diagram 300 of a data processing device 202, according to one embodiment of the present invention. The data processing device 202 may include a processing unit 302, one or more memory 306, a database 204, a network interface 308, an input unit 310, and an output unit 312. The data processing device 202 may further include one or more buses 322 that functionally couple various components of the data processing device 202.

The memory 306 may include volatile memory (memory that maintains its state when supplied with power) such as random access memory (RAM) and/or non-volatile memory (memory that maintains its state even when not supplied with power) such as read-only memory (ROM), flash memory, ferroelectric RAM (FRAM), and so forth. Persistent data storage, as that term is used herein, may include non-volatile memory. In certain example embodiments, volatile memory may enable faster read/write access than non-volatile memory. However, in certain other example embodiments, certain types of non-volatile memory (e.g., FRAM) may enable faster read/write access than certain types of volatile memory. In certain example, the database 204 may be equivalent to the memory. In various implementations, the memory may include multiple different types of memory such as various types of static random access memory (SRAM), various types of dynamic random access memory (DRAM), various types of unalterable ROM, and/or writeable variants of ROM such as electrically erasable programmable read-only memory (EEPROM), flash memory, and so forth. The memory 306 may include main memory as well as various forms of cache memory such as instruction cache(s), data cache(s), translation lookaside buffer(s) (TLBs), and so forth. Further, cache memory such as a data cache may be a multi-level cache organized as a hierarchy of one or more cache levels (LI, L2, etc.).

The memory 306 may include a module stored in the form of machine-readable instructions executable by the one or more processing units 302. The memory may include multiple modules such as segregation module 314, contextualization module 316, visualization module 318, and verification module 320. The multiple modules interact with each other to contextualize the knowledge graph 100 and perform cleansing of the knowledge graph 100.

The database 204 may include removable storage and/or non-removable storage including, but not limited to, magnetic storage, optical disk storage, and/or tape storage. The database 204 may provide non-volatile storage of computer-executable instructions and other data.

The database 204 may store computer-executable code, instructions, or the like that may be loadable into the memory and executable by the processing unit 302 to cause the processing unit 302 to perform or initiate various operations such as the operations required for contextualizing the knowledge graph 100 and cleaning the knowledge graph 100. The database 204 may store data in the form of tables and structured knowledge graphs 100 and that may be copied to memory for use by the processing unit 302 during the execution of the computer-executable instructions. Moreover, output data generated as a result of execution of the computer-executable instructions by the processing unit 302 may be stored initially in memory and may ultimately be copied to the database 204 for non-volatile storage.

More specifically, the database 204 is configured to access the memory; and one or more program module, applications, engines, managers, computer-executable code, scripts, or the like such as, for example, the various modules of the memory such as segregation module 314, contextualization module 316, visualization module 318, and verification module 320. Any of the components depicted as being stored in the database 204 may include any combination of software, firmware, and/or hardware. The software and/or firmware may include computer-executable instructions (e.g., computer-executable program code) that may be loaded into the memory for execution by one or more of the processing units 302 to perform any of the corresponding operations described earlier.

The processing unit 302 may be configured to access the memory and execute computer-executable instructions loaded therein. For example, the processing unit 302 may be configured to execute computer-executable instructions of the various program module, applications, engines, managers, or the like of the segregation module 314, contextualization module 316, visualization module 318, and verification module 320 to cause or facilitate various operations to be performed in accordance with one or more embodiments of the disclosure. The processing unit 302 may include any suitable processing unit 302 capable of accepting data as input, processing the input data in accordance with stored computer-executable instructions, and generating output data. The processing unit 302 may include any type of suitable processing unit 302 including, but not limited to, a central processing unit 302, a microprocessor, a Reduced Instruction Set Computer (RISC) microprocessor, a Complex Instruction Set Computer (CISC) microprocessor, a microcontroller, an Application Specific Integrated Circuit (ASIC), a Field-Programmable Gate Array (FPGA), a System-on-a-Chip (SoC), a digital signal processor (DSP), and so forth. Further, the processing unit 302 may have any suitable micro architecture design that includes any number of constituent components such as, for example, registers, multiplexers, arithmetic logic units, cache controllers for controlling read/write operations to cache memory, branch predictors, or the like. The micro architecture design of the processing unit 302 may be capable of supporting any of a variety of instruction sets.

The processing unit 302 is configured for receiving an original knowledge graph 100 comprising nodes, and edges that define relationship between the nodes. The original knowledge graph 100 herein may refer to knowledge graph 100 that is to be contextualized and cleansed.

The processing unit 302, using a segregation module 314, is configured for segregating node data associated with each of the nodes. The node data comprises information such as data type of the node, hierarchical information of the node, meta tags associated with the node, and a property data of the node. As an example, data type of the node may indicate the source from which the data of the node originates. Hierarchical information of the node relates to the level of the data of the node in the entire database 204. Meta tags of the node represent the relationship of the node with other nodes in the knowledge graph 100. Properties of the node relates to the properties associated with the object of the node. All such data related to the node may be classified as node data and are segregated using visual layering technique to easily visualise the node data associated with the node.

The processing unit 302, using a contextualization module 316, is configured for determining contextual node data based on a query received from the user. The node data of the original knowledge graph 100 is analyzed based on the context and the node data that is relevant to the context is determined as contextual node data. The present invention may employ different techniques for determining context from the query received from the user, wherein the techniques may include natural language processing, semantic analysis, keyword matching, machine learning algorithms so on and so forth.

The processing unit 302, using a visualization module 318, is configured for displaying the contextual node data to the user, wherein displaying the contextual node data enables the user to analyze the relevant data in the original knowledge graph 100 and detect errors in the contextual node data. The visualization module 318 presents the contextual node data in a visually readable format for better understanding of the contextual node data. Advantageously, presenting the contextual node data reduces the human effort required to identify the errors in the knowledge graph 100 by reviewing the entire data in the knowledge graph 100. By presenting the contextual node data the human user can only review the relevant data and identify the errors in the knowledge graph 100. In other words, a part of the original knowledge graph 100 that is relevant to the context is presented and each node of the presented knowledge graph 100 comprises the contextual node data.

The processing unit 302, using a verification module 320, is configured for performing a verification operation on the original knowledge graph 100 to identify errors. In one embodiment, the processing unit 302 may automatically detect the errors in the original knowledge graph 100 based on the technical or non-technical data associated with the original knowledge graph 100. In one embodiment, the user may verify the presented contextual node data to identify the errors.

The processing unit 302 is configured for receiving one or more inputs from the user for updating the original knowledge graph 100 to correct the identified errors. The correction may relate to changing the relationship between the nodes, changing the data of the nodes, so on and so forth.

The processing unit 302 is configured for updating the original knowledge graph 100 based on the inputs received from the user to obtain an updated knowledge graph 100. Thus, the present invention reduces the human effort in identifying errors in the original knowledge graph 100 and corrects the errors in the original knowledge graph 100 to present the updated knowledge graph.

The input unit 310 and the output unit 312 may facilitate the receipt of input information by the various modules from one or more I/O devices as well as the output of information from the modules to the one or more I/O devices. The I/O devices may include any of a variety of components such as a display or a display screen having a touch surface or a touchscreen; an audio output device for producing sound, such as a speaker; an audio capture device, such as a microphone; an image and/or video capture device, such as a camera; a haptic unit; and so forth. The I/O devices may further include, for example, any number of peripheral devices such as data storage devices, printing devices, and so forth.

The network interface 308 may include communication links and associated networking devices (e.g., link-layer switches, routers, etc.) for transmitting network traffic over any suitable type of medium including, but not limited to, coaxial cable, twisted-pair wire (e.g., twisted-pair copper wire), optical fiber, a hybrid fiber-coaxial (HFC) medium, a microwave medium, a radio frequency communication medium, a satellite communication medium, or any combination thereof.

The bus 322 may include at least one of a system bus, a memory bus, an address bus, or a message bus, and may permit the exchange of information (e.g., data (including computer-executable code), signaling, etc.) between various components of the data processing device 202. The bus may include, without limitation, a memory bus or a memory controller, a peripheral bus, an accelerated graphics port, and so forth.

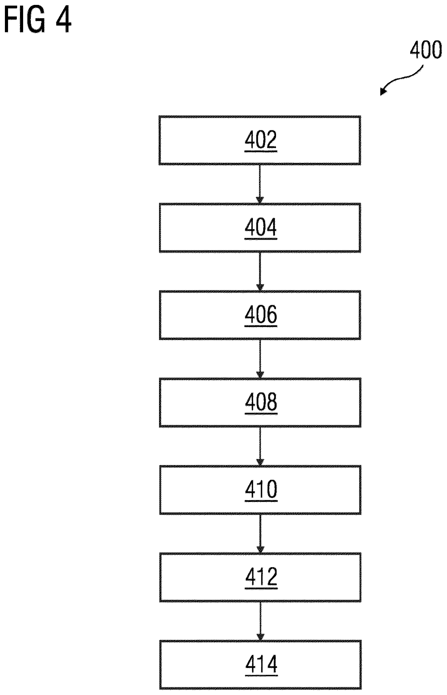

FIG. 4 is a flowchart 400 of method for contextual visualization and cleansing of a knowledge graph 100, according to one embodiment of the present invention. At step 402, the original knowledge graph 100 comprising nodes and edges is received by the processing unit 302. The processing unit 302 may retrieve the original knowledge graph 100 from the database 204 of the data processing device 202.

At step 404, the node data associated with the nodes of the original knowledge graph 100 is segregated by the processing unit 302 using the segregation module 314. The node data comprises data including, but not limited to, data type of the node, hierarchical information of the node, meta tags associated with the node, and a property data of the node. The node data is segregated based on the category of the data based on well-known data segregation techniques such as semantic segregation, hierarchical segregation, so on and so forth.

At step 406, the contextual node data from the original knowledge graph 100 is determined by the processing unit 302 using the contextualization module 316. The context may be determined based on a query received from the user or based on the user accessing the knowledge graph 100. The processing unit 302 may employ techniques such as natural language processing, semantic analysis, keyword matching, machine learning algorithms, or the like to determine the context. Further, based on the context, the node data of the original knowledge graph 100 that is relevant to the context is determined. Thus, a set of node data from the original knowledge graph 100 that is relevant to the context is extracted as contextual node data.

As an example, the original knowledge graph 100 may comprise data related to building infrastructure. The user may provide a query to provide data related to electrical systems of the building. The processing unit 302 may determine the context as electrical system and may extract the node data related to electrical systems of the building as contextual node data.

At step 408, the contextual node data is displayed to the user by the processing unit 302 using the visualization module 318. Displaying the contextual node data enables the user to analyze the relevant data in the original knowledge graph 100 and detect errors in the contextual node data. By presenting the contextual node data the human user can only review the relevant data and identify the errors in the knowledge graph 100. In other words, a part of the original knowledge graph 100 that is relevant to the context is presented and each node of the presented knowledge graph 100 comprises the contextual node data.

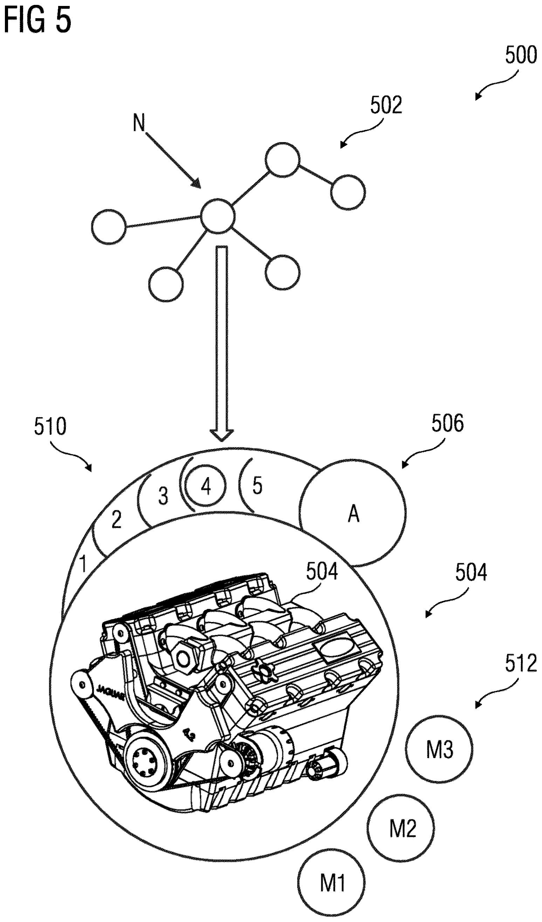

In an embodiment, displaying contextual node data to the user comprises presenting an information related to an asset associated with the node based on the query received from the user. The information related to the asset is presented in an audio or visual medium to the user (refer FIG. 5).

At step 410, the original knowledge graph 100 is verified by the processing unit 302 using verification module 320 to identify errors in the original knowledge graph 100. In one embodiment, the processing unit 302 may automatically detect the errors in the original knowledge graph 100 based on the technical or non-technical data associated with the original knowledge graph 100. In one embodiment, the user may verify the presented contextual node data to identify the errors in the original knowledge graph 100.

At step 412, one or more inputs is received from the user for updating the original knowledge graph 100 to correct the identified errors. The inputs may correspond to changing relationship between nodes, correcting numerical errors, or the like.

In one embodiment, the data processing device 202 automatically recommends a correct data to rectify the error in the original knowledge graph 100.

At step 414, the original knowledge graph 100 is updated by the processing unit 302 based on the inputs received from the user to obtain an updated knowledge graph. Thus, the method reduces the human effort in identifying errors in the original knowledge graph 100 and corrects the errors in the original knowledge graph 100 to present the updated knowledge graph.

The original knowledge graph 100 is updated by the data processing device 202 by modifying at least a part of the node data associated with at least one node.

The modification may be changing the relationship between the nodes, changing the meta tags, or the like.

FIG. 5 illustrates an example user interface 500 for displaying contextual node to the user, according to an embodiment of the present invention. The knowledge graph 502 with contextual node data is presented to the user as nodes and edges defining relationship between the nodes. The user may select one of the nodes of the knowledge graph 502 to visualize the contextual node data for the selected node. The contextual node data of the selected node is presented as a comprehensive visual 504, wherein the data type of the node 506, drawing of the object associated with the node 508, maturity index of the node 510, and meta tags of the node 512 are displayed to the user.

Thus, displaying of the contextual node data of the knowledge graph 502 enables easier identification of errors in any nodes of the knowledge graph 502. Therefore, human effort of analyzing multiple tables of data to identify errors in a knowledge graph 502 is avoided.

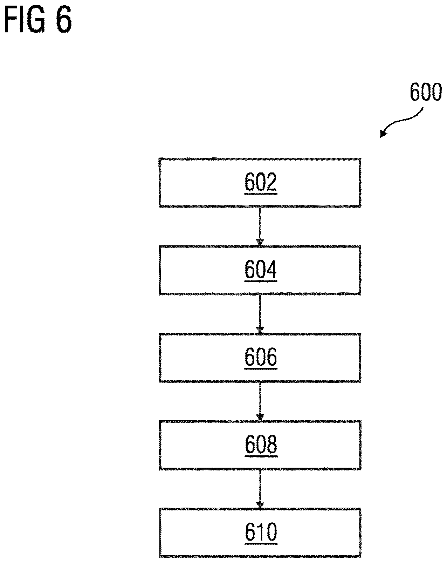

FIG. 6 is a flowchart 600 illustrating a method of determining context for contextual node data, according to an embodiment of the present invention. At step 602, a unique identifier associated with the user is received by the processing unit 302 to authenticate the user. The processing unit 302 authenticates the user and provides the user access to the knowledge graph 100. The unique identifier may be an alphanumeric string, barcode, QR code, RFID tag so on and so forth.

At step 604, information pertaining to the user based on the unique identifier associated with the user is obtained by the processing unit 302. The processing unit 302 analyzes the unique identifier of the user and obtains the information pertaining to the user from the database 204. The information pertaining to the user may the role of the user, area of technical expertise of the user, so on and so forth.

At step 608, context is determined by the processing unit 302 based on the information pertaining to the user. As an example, if the user has a technical expertise in electrical systems, the processing unit 302 determines the context as electrical systems.

At step 610, the contextual node data is identified by the processing unit 302 by identifying the segregated node data relevant to the determined context. As an example, if the context is determined as electrical systems, the processing unit 302 identifies the node data that is relevant to electrical systems and extracts the data as contextual node data.

At step 612, the identified contextual node data relevant to the determined context is displayed on the UI device 208 by the processing unit 302. Therefore, if an electrical engineer is accessing the knowledge graph 100, the node data related to electrical systems is automatically displayed to the electrical engineer.

Thus, the node data that is relevant to the user accessing the knowledge graph 100 is displayed to the user and the user can easily identify the errors in the node data relevant to the user. Therefore, the human effort required to cleanse the knowledge graph 100 is minimized.

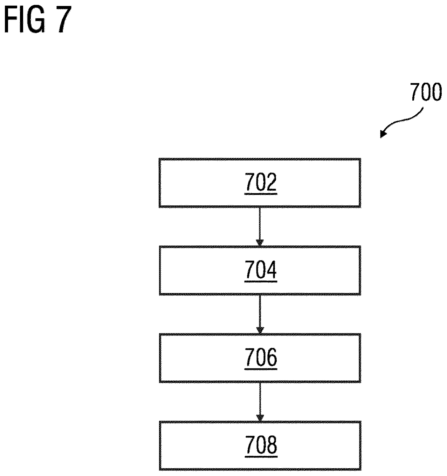

FIG. 7 is a flowchart 700 illustrating a method of determining context for contextual node data, according to an embodiment of the present invention. At step 702, the query received from the user is processed by the processing unit 302. As an example, the query may be a text input from the user relating to a specific domain for which the node data is to be displayed.

At step 704, the context from the query received from the user is determined by the processing unit 302 after processing the query. The processing unit 302 may use techniques such as natural language processing, semantic analysis, keyword matching, or any other similar technique.

At step 706, the contextual node data is identified by the processing unit 302 by identifying the segregated node data relevant to the determined context. As an example, if the context is determined as plumbing, the processing unit 302 identifies the node data that is relevant to plumbing systems and extracts the data as contextual node data.

At step 708, the identified contextual node data relevant to the determined context is displayed on the UI device 208 by the processing unit 302. Therefore, if the user provides a query to access plumbing related data, the node data related to plumbing systems is automatically displayed to the user.

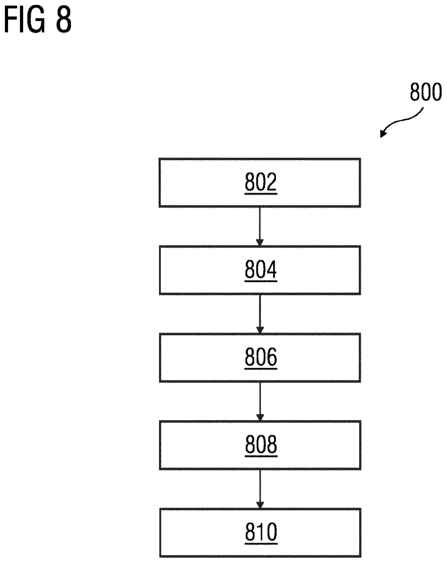

FIG. 8 is a flowchart 800 of a method of automatically recommending correct data to rectify error in a knowledge graph 100, according to an embodiment of the present invention. At step 802, the error in the original knowledge graph 100 is identified. In one embodiment, the error is automatically identified by the processing unit 302. In one embodiment, the error in the original knowledge graph 100 is identified by the user.

At step 804, at least two sources of information related to the error that is detected is retrieved by the processing unit 302. The database 204 comprises all the background information related to the knowledge graph 100. The processing unit 302 analyses the database 204 and retrieves at least two sources of information that is related to the error. For example, if there is an error in the knowledge graph 100 regarding number of pipes installed in a floor, the processing unit 302 may retrieve at least two sources of information that relates to pipe installation information.

At step 806, the data in the retrieved two sources of information are compared with each other by the processing unit 302. The comparison of at least two sources of information ensures that the recommended correct data is accurate.

At step 808, the correct data is determined by the processing unit 302 based on the comparison between the two sources of information. A reliability score is provided for each of the sources of information and based on the reliability score the correct data is determined.

At step 810, the determined correct data is recommended automatically by the processing unit 302 to the user to rectify the error in the original knowledge graph 100. Thus, the correct data is automatically recommended to the user to update the original knowledge graph 100.

An example implementation of the present invention is explained. Consider a use case of a Building onboarding scenario, where data from the building IOT systems and existing building plan data is to be uploaded on to the Knowledge graph. During upload the system shows the visualization of the assets, as equipment's in different floors mapped on their respective locations as smart preview. The co-ordinates of the equipment are calculated with reference to a common co-ordinate system, from plans and other related data. Every equipment based on context is shown in its spatial orientation along with other related data for the domain expert to take decision like the confidence level of the data, the meta tags the equipment is having like energy information, life of the machine etc.

Let us consider a conflict where the building has 103 rooms in floor number 6 and when the information is loaded in the knowledge graph it has taken only 101 rooms. The two rooms data has been missed during uploading of the original knowledge graph. When the user comes in to do the sanitation checks of the building, through visualization of contextual node data a preview of the building plans and the floor plans for reference is displayed to the user.

Further the processing unit recommends a correct data, by running a set of standard rules like floor checks - the system does a triangulation check. The same data is looked into different areas and the authenticity of the data is suggested as recommendations. The number of floors in the building will be available in the specification document, when that data reading is wrong, it checks again the floor plan for the related information by reading the drawing information and extracting the relevant data. By checking more than two sources, when there is a conflict, it highlights the conflict and gives the recommendation based on the reliability score of the data. In this case the reliability score of the building plan is more than the reliability of the specification document. So, the intelligent system recommends the building 6th floor has 103 rooms and also showcases the rooms' location to creating the additional node in the knowledge graph.

Thus, the present invention reduces the human effort in identifying the errors in the knowledge graph by present contextual node data to the user. Further, the present invention, provides a feature of automatically recommending a correct data when an error is identified.

While the invention has been illustrated and described in detail with the help of a preferred embodiment, the invention is not limited to the disclosed examples. Other variations can be deducted by those skilled in the art without leaving the scope of protection of the claimed invention.

### List of references

- 100: Knowledge graph
- N1 to Nn: Nodes
- E1 to En: Edges
- 200: system for contextual visualization and cleansing of a knowledge graph
- 202: Data processing device
- 204: Database
- 206: Communication network
- 208: UI Device
- 302: Processing unit
- 306: Memory
- 308: network interface
- 310: input unit
- 312: output unit
- 314: segregation module
- 316: contextualization module
- 318: visualization module
- 320: verification module
- 322: Bus
- 400: flowchart of method for contextual visualization and cleansing of a knowledge graph
- 500: example user interface for displaying contextual node to the user
- 600: flowchart illustrating a method of determining context for contextual node data
- 700: flowchart illustrating a method of determining context for contextual node data
- 800: flowchart of a method of automatically recommending correct data to rectify error in a knowledge graph

## Claims

1. A method, implemented by a data processing device (202) comprising a processing unit (302), for contextual visualization and cleansing of a knowledge graph (100), wherein the method comprises:
receiving, by the data processing device (202), an original knowledge graph (100) comprising nodes (N1 to Nn), and edges (E1 to En) that define relationship between the nodes;
segregating, by the data processing device (202), node data associated with each of the nodes, wherein the node data comprises data type of the node (506), hierarchical information of the node, meta tags (512) associated with the node, and a property data (510) of the node;
determining, by the data processing device (202), a contextual node data associated with the node based on a query received from a user, wherein the contextual data is a part of the segregated node data that is relevant to the context;
displaying, by the data processing device (202), the contextual node data to the user, wherein the contextual node data enables the user to analyze the relevant data in the original knowledge graph (100) and detect errors in the contextual node data;
performing, by the data processing device (202), a verification operation on the original knowledge graph (100) to identify errors;
receiving, by the data processing device (202), one or more inputs from the user for updating the original knowledge graph (100) to correct the identified errors; and
updating, by the data processing device (202), the original knowledge graph (100) based on the inputs received from the user to obtain an updated knowledge graph.

2. The method according to claim 1, wherein the method further comprises:
presenting an information related to an asset associated with the node based on the query received from the user, wherein the information related to the asset is presented in an audio or visual medium (508) to the user.

3. The method according to any of the preceding claims, wherein determining a contextual node data associated with the node comprises:
receiving, by the data processing device (202), a unique identifier associated with the user to authenticate the user;
obtaining, by the data processing device (202), information pertaining to the user based on the unique identifier associated with the user;
determining the context based on the information pertaining to the user;
identifying, by the data processing device (202), the contextual node data by identifying the segregated node data relevant to the determined context; and
graphically displaying, by the data processing device (202), the identified contextual node data relevant to the determined context.

4. The method according to any of the preceding claims, wherein determining a contextual node data associated with the node comprises:
processing, by the data processing device (202), the query received from the user;
determining, by the data processing device (202), the context from the query received from the user after processing the query;
identifying, by the data processing device (202), the contextual node data by identifying the segregated node data relevant to the determined context; and
graphically displaying, by the data processing device (202), the identified contextual node data relevant to the determined context.

5. The method according to any of the preceding claims, wherein updating the original knowledge graph (100) by the data processing device (202) includes modifying at least a part of the node data associated with at least one node.

6. The method according to any of the preceding claims, wherein the method further comprises:
recommending, by the data processing device (202), a correct data to rectify the error in the original knowledge graph (100).

7. The method according to any of the preceding claims, wherein recommending a correct data to rectify the error comprises:
retrieving, from a database, at least two sources of information related to the error that is detected;
comparing, by the data processing device (202), the data in the retrieved two sources of information with each other;
determining, by the data processing device (202), the correct data based on the comparison between the two sources of information based on a reliability score of the sources of information; and
recommending, by the data processing device (202), the determined correct data to the user to rectify the error in the original knowledge graph (100).

8. A data processing device (202) configured for contextual visualization and cleansing of a knowledge graph (100), the apparatus comprising:
one or more processing units (302); and
a memory communicatively coupled to the one or more processing units (302), the memory comprising a module stored in the form of machine-readable instructions executable by the one or more processing units (302), wherein the module is configured to perform the method steps according to claims 1 to 7.

9. A system (200) for contextual visualization and cleansing of a knowledge graph (100), wherein the system (200) comprises:
a User Interface (UI) device (208) comprising an input module and an output module, wherein the UI device (208) is configured to:
receive one or more inputs from the user via the input module; and
display the contextual node data to the user, wherein the contextual node data enables the user to analyze the relevant data in the original knowledge graph (100) and detect errors in the contextual node data; and
a data processing device (202) according to claim 8 communicatively connected to the UI device (208) via a communication network (206), wherein the data processing device (202) is configured for contextual visualization and cleansing of a knowledge graph (100), according to any of the claims 1 to 7.

10. A computer-program product, having computer-readable instructions stored therein, that when executed by a processing unit (302), cause the processing unit (302) to perform method steps according to any of the claims 1 to 7.

11. A computer readable medium on which program code sections of a computer program are saved, the program code sections being loadable into and/or executable in a system to make the system execute the method steps according to any of the claims 1 to 7 when the program code sections are executed in the system.
